# EUROPEAN PATENT SPECIFICATION

(11) **EP 3 140 227 B1**
(45) Date of publication and mention of the grant of the patent: **10.07.2019**
(21) Application number: 15729255.8
(22) Date of filing: 08.05.2015
(51) Int. Cl.: B65G 21/06, B65G 21/18, B65G 21/22

(54) **SPIRAL CONVEYOR**
SPIRALFÖRDERER
TRANSPORTEUR HÉLICOÏDAL

(30) Priority: 08.05.2014 NL 2012784
(43) Date of publication of application: 15.03.2017
(73) Proprietor: Jonge Poerink Conveyors B.V., 7622 AV Borne (NL)
(72) Inventor: OUDE ROELINK, Anthonius Gerhardus, 7461 BT Rijssen (NL)
(74) Representative: Patentwerk B.V.
(86) International application number: PCT/NL2015/050316
(87) International publication number: WO 2015/170982

(56) References cited:
- EP-A1- 0 480 863
- WO-A1-99/61352
- WO-A1-2010/146098
- US-A- 3 904 025

## Description

The invention relates to a spiral conveyor part, according to the preamble of claim 1.

In the art, spiral conveyor systems are widely used. These kind of systems are used to transport goods from a first level up or down to another level. Alternatively these spiral conveyors can be used as flexible buffer for temporary product storage in e.g. production lines. Mostly a spiral conveyor comprises some basic components: a spiral support frame, a chain or belt track, a belt or chain, a drive system and two belt or chain return ends.

In the art, the spiral conveyor track is manufactured of metal parts e.g. extruded aluminium elements, which are bolted or welded together. This provides a sturdy, yet rather heavy and inflexible spiral conveyor system. For less demanding applications and higher flexibility, e.g. when product pathways are changed frequently, spiral conveyors of the art are less suitable. Furthermore, they are more cumbersome to disassemble and reassemble. Furthermore the production costs of these spiral conveyor tracks is relatively expensive. A spiral conveyor according to the preamble of claim 1 is known by document US 3 904 025 A.

The international application WO99/61352 discloses a spiral arranged chute for vertical downward transport of goods. This chute is however not suitable for a belt or chain conveyor.

Accordingly it is an object of the invention to mitigate or solve the above described and/or other problems of belt and chain link spiral conveyors in the art, while maintaining and/or improving the advantages thereof.

More specifically the object of the invention can be seen in improving the flexibility, and/or the ease of manufacture of belt and chain link spiral conveyors while reducing the cost of manufacture of the same.

These and/or other objects are reached by a spiral conveyor part according to claim 1.. This can provide a more cost effective manufacturing technique, which can produce portions which can very flexibly be applied. Furthermore spiral conveyors made of these parts are relative light and versatile in application.

The inner space of the rotary moulded structure is hollow and/or partially or completely filled with a second component. Thus a light weight sturdy elements can be produced that comprise a relative low amount of construction material and can be more easily connected. For instance customised spiral track portions can be sawn at any desired length and yet be connected to other track parts. By filling the hollow track portion with e.g. a curing foam, an even more sturdy, yet cost effective track portion can be obtained. Furthermore, by filling the hollow interior with a foam, sound generated by a track or belt, moving over the track portion, can be reduced. The conveyor track can comprise a slit. In this slit, rollers, mounted on the belt or the conveyor links can be guided. Thus wear at the side walls of the track and enhanced friction may be reduced. For straight portions, the slit may be omitted, whereas in curved portions, application can be advantageous.

The conveyor part also comprises slide bar connectors. The slide bars can provide additional strength and can avoid wear of the support surface of the conveyor track. The slide bar connectors comprise longitudinal slits. At least one abutting end of the spiral track portion is provided with a first connector. Thus the track parts can be interconnected, rendering the system flexible and versatile similar to a toy train track. A second abutting end is provided with a second connector. The first and/or the second connector can of the male or of the female type.

The female type connector can comprise a male connector receiving space for a tight fit. By a close fit, the separate parts can be prevented from moving relative to each other. Thus wear and hook ups of a track or belt can be prevented and a smooth ride of the belt or chain can be improved.

In a dedicated part, the first abutting end opposing second end can comprise a shaft or axle, configured to guide a belt or a chain return. The shaft can be connected to a drive, e.g. an electric motor eventually provided with a gear. Thus a chain or belt conveyor can be assembled comprising at least an intermediate conveyor portion, a return end conveyor part and drive end conveyor part. Thus the two return ends can allow a transport flight and a return flight of the conveyor belt or chain to run as a closed loop over the conveyor assembled from the separate portions. In this conveyor the return axle can be configured to run idle. Alternatively on both ends of a completed track, two drive units can be placed. This arrangement can be applied e.g. for a better transport of the return part of the conveyor chain or conveyor belt.

The conveyor part can be provided with indicators, lines or marks along its track contour, to indicate a certain length or angle of the track, such that it can be sawn or cut at these marks in order to obtain a sub conveyor part of a predetermined angle and/or length. These marks or indicators provide an guide to cut or saw the sub portion at both the right angle and the right length, such that a design of the portion can be further simplified. There is e.g. no 30 or 60 degree portion necessary, if there is provided a 90 degree portion with two saw lines, one at 30 degree and one at 60 degree. Additionally another saw line can be provided at 45 degree. These marks or indicators thus provide additional flexibility in installation and reduction of a multitude of manufacturing moulds. Less moulds means less investment costs and thus a less expensive production.

A central ring, a part of an upright or a stem like structure can be attached to the spiral conveyor part. This central ring, upright or stem like structure can support the conveyor part and additional rings of other spiral conveyor portions can be assembled therewith or mounted thereon. Thus the spiral conveyor can be custom build at the premises of the client, by clicking additional conveyor parts onto a base element. This feature renders the spiral conveyor more flexible and very easy to construct.

The height of the central ring, the upright, or the stem like structure can correspond to the flight height of the spiral conveyor part, such that when several spiral conveyor parts are mounted on top of each other, the central rings, uprights or stem like structures of each of the individual spiral conveyor part forms a combined central stem, upright or stacked ring structure.

A further aspect of the invention is a method of manufacturing a spiral conveyor portion comprising the following steps, to be performed in any suitable order: providing a rotary mould having a cavity shaped as the outside of any of the herein above described parts, adding a thermoplastic or resinous material inside the mould, rotating the mould under gradually heating the mould, allowing the thermoplastic material to melt and to cover the inner walls of the mould or allowing the resinous material to cure on the inner walls of the mould, allowing the mould to cool, opening the mould to remove the spiral conveyor portion. Thus flexible and cost effective conveyor parts can be manufactured.

In order to further elucidate the invention, exemplary embodiments will be described with reference to the figures. In the figures:
Figure 1 depicts a first schematic perspective view of a spiral conveyor track portion according to a first embodiment of the invention;
Figure 2 depicts a schematic perspective view of a series of spiral conveyor track portions according to the embodiment shown in figure 1;
Figure 3 depicts a second schematic perspective view of the embodiment shown in figure 2;
Figure 4 depicts a schematic perspective view of a spiral conveyor track portion according to a further embodiment of the invention;
Figure 5 depicts a schematic perspective view of a spiral conveyor track portion according to another embodiment of the invention;
Figure 6 depicts a schematic perspective view of a spiral conveyor track portion according to a further embodiment of the invention;
Figure 7 depicts a schematic perspective view of a spiral conveyor track portion according to a further embodiment of the invention;
Figure 8 depicts a schematic perspective view of a spiral conveyor track portion according to another embodiment of the invention;
Figure 9A depicts a schematic cross sectional view of a spiral conveyor track portion according to a further embodiment of the invention;
Figure 9B depicts a schematic cross sectional view of a spiral conveyor track portion according to a further embodiment of the invention;
Figure 10 depicts a schematic perspective view of a spiral conveyor track portion according to an alternative embodiment of the invention;
Figure 11 depicts a schematic perspective view of a spiral conveyor track portion according to an alternative embodiment of the invention;
Figure 12 depicts a schematic perspective view of a spiral conveyor track portion according to an alternative embodiment of the invention;
Figure 13 depicts a schematic perspective view of a support arm for a conveyor track portion according to yet an alternative embodiment of the invention;
Figure 14 depicts a schematic perspective view of an alternative connection for conveyor track portions according to an embodiment of the invention;
Figure 15 depicts a second schematic perspective view of the connection for conveyor track portions according to figure 14;
Figure 16 depicts a schematic perspective view of an alternative connection for conveyor track portions according to an embodiment of the invention; and
Figure 17 depicts a schematic perspective view of some accessories for a conveyor track portions according to an embodiment of the invention.

The figures represent specific exemplary embodiments of the inventions and should not be considered limiting the invention in any way or form. Throughout the description and the figures the same or corresponding reference numerals are used for the same or corresponding elements.

The expression "longitudinal" used herein is to be understood as, though not to be considered limited to the direction similar to the direction of motion of the belt or conveyor chain links within or on the conveyor track.

The expression "abutting end or abutting surface" used herein is to be understood as, though not to be considered limited to the ends of the conveyor track portion, where the track portion is connected to another track portion.

The expression "male or male connector of a track portion" used herein is to be understood as, though not to be considered limited to a connector configured to have an extending portion able and suitable for being inserted in a female connector of a track portion and to fit in snugly, preferably such that both portions are aligned and form a continuous combined track when connected.

The expression "female or female connector of a track portion" used herein is to be understood as, though not to be considered limited to a connector configured to have an open structure able and suitable for accepting a male connector of a track portion to fit in, preferably such that both portions are aligned and form a continuous combined track when connected.

The expression "track or track portion" used herein is to be understood as, though not limited to a piece or a portion of a conveyor structure, on which a conveyor belt and/or a chain conveyor can move, wherein the conveyor belt or chain is guided or supported by the track or the track portion.

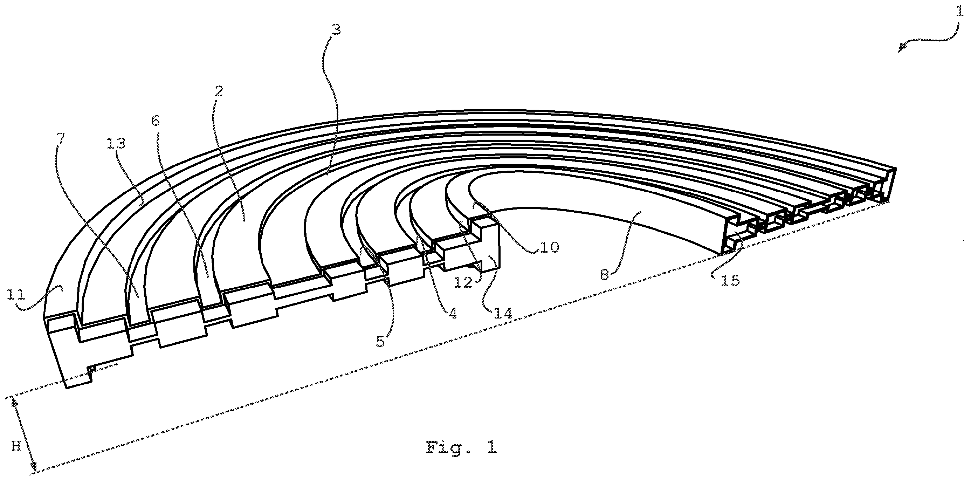

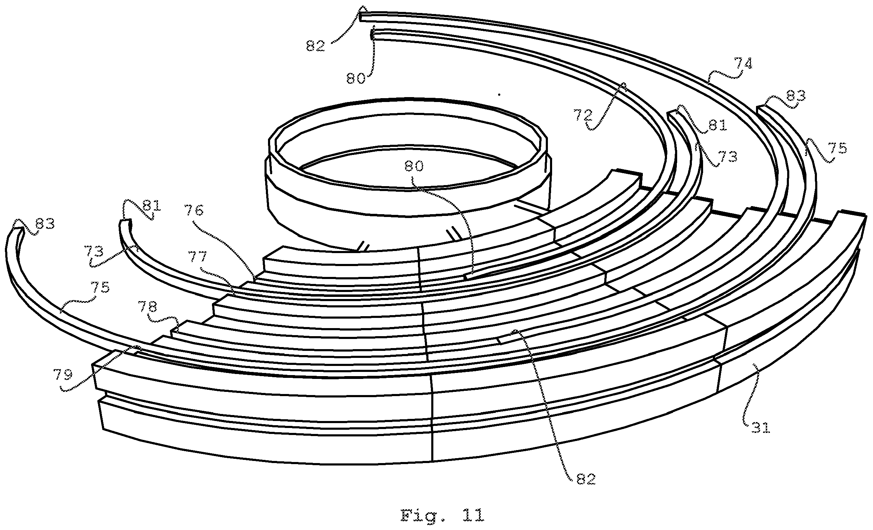

In figure 1, a first schematic perspective view of a spiral conveyor track portion 1 is shown. The track portion 1 comprises a surface 2 on which a belt or chain links can be supported and can move. In the surface 2 a slit 3 is positioned in the middle of the track. In this slit 3, rollers or guiding pins of the individual chain links can move, such that the conveyor chain links are neatly guided over the surface 2. The surface 2 comprises 4 additional slits 4, 5, 6 and 7 for allowing rods 72, 73, 74 and 75 to be inserted, as can be seen in figure 11.

The sides of the track portion 1 are provided with surface 12 and 13 that are designed to further guide the conveyor chain or belt and/or products thereon and to prevent any fingers from being caught underneath the conveyor links.

The abutting ends of the spiral conveyor track portion 1 are provided with connectors 14 and 15. The connector 14 is of the male type and fits in snugly in the female connector 15. The spiral track portion 1 has a similar configuration of slits on both the upper and the lower side, such that the spiral conveyor track portion 1 can be flipped in order to use the other side. This may be convenient, If the track portion, it should be connected to, is of the same type and has either a male or a female connector at its connecting end. By flipping the track part 1, the female connector will be at the lower end, in the position as shown in figure 1, the male connector 14 is at the lower end of the spiral track portion 1.

The spiral track portion 1 as shown in figure 1 covers an angle of 180 degrees. Over this angle, the spiral track portion 1 gains a height h. It is noted that any other angle can be chosen, without departing from the scope of the invention.

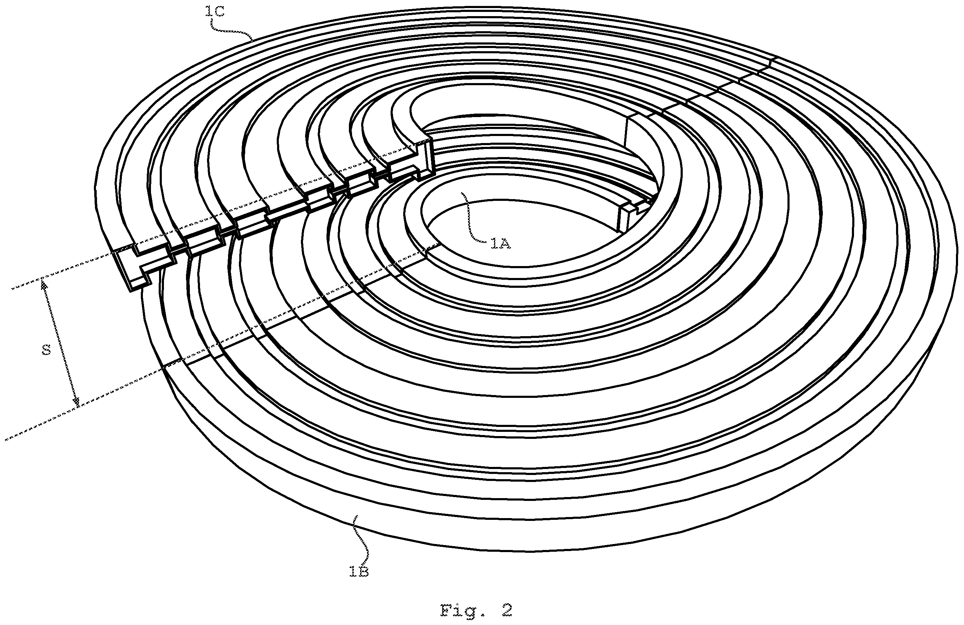

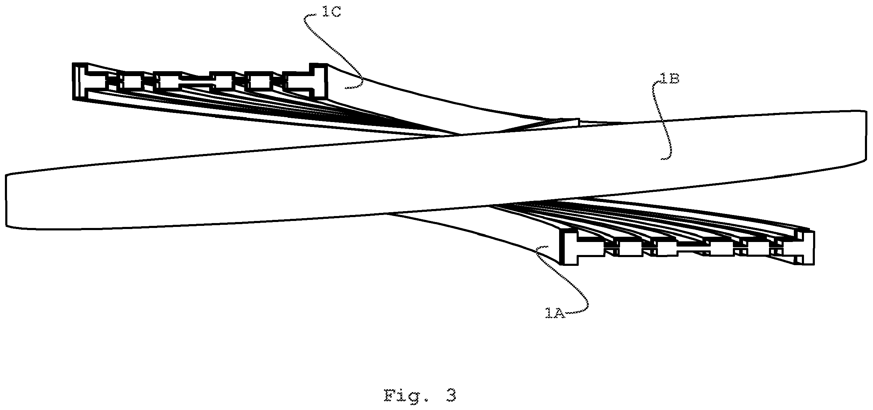

In figures 2 and 3, a series of three spiral conveyor track portions 1A, 1B and 1C are connected, in order to build a 1 and a half flight spiral. The pitch S of the spiral in figure 2 equals twice the height H in figure 1.

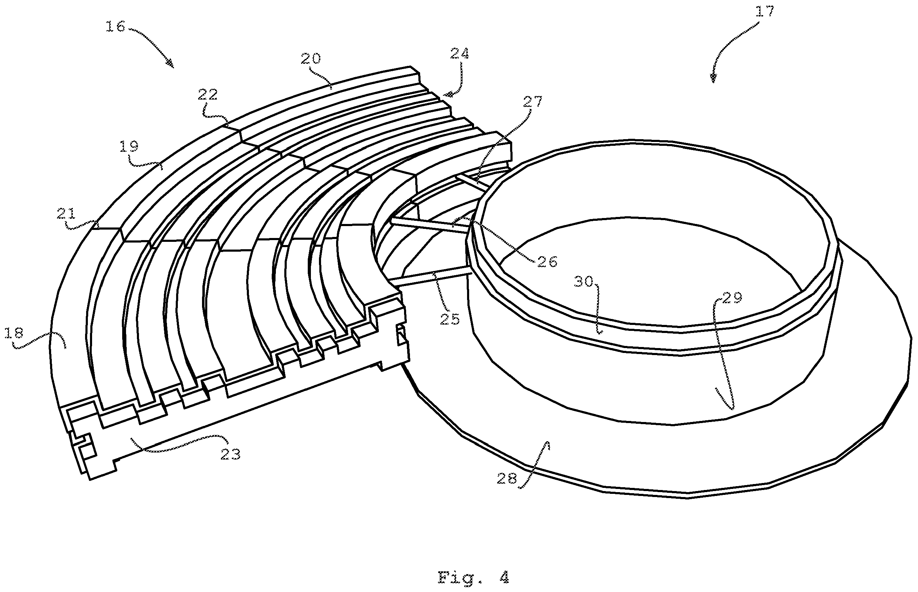

In figure 4 a schematic perspective view of a spiral conveyor track portion 16 is shown. The spiral conveyor track portion 16 is provided with cut lines 21 and 22, that divide the spiral conveyor track portion 16 in three spiral conveyor track sub portions 18, 19 and 20. In figure 4, the track sub portion 16 covers an angle of 90 degrees, and the track sub portions 18, 19 and 20 each cover an angle of 30 degrees. The sub track portion 16 comprises at a first, higher abutting end a male connector 23 and at a second, lower abutting end a female connector 24.

At the inner curve, the track portion is provided with rods 25, 26 and 27, that connect the spiral conveyor track portion 16 to a foot 17. These rods 25, 26 and 27 can be inserted through the track portions 16 at dedicated points or can be installed as supports on which the track portions 16 are mounted on, or supported by. This foot 17 comprises a bottom plate 28, which can be positioned on a floor. On the bottom plate 28 an substantially circular central support ring 29 is connected, on which the rods 25, 26 and 27 are mounted. The central support ring is 29 provided with a male connector 30 at its upper side.

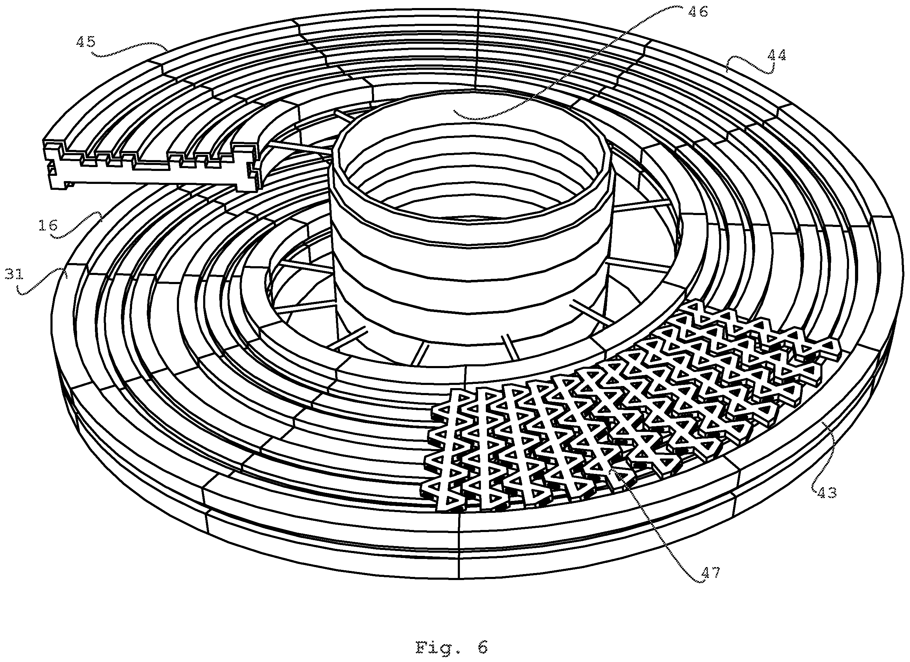

The spiral conveyor track portion 16 can build the foundation for a spiral tower. On the first spiral conveyor track portion 16 a second spiral conveyor track portion 31 can be mounted, as is shown in figure 6. The second spiral conveyor track portion 31 is connected to a central ring 40 by means of the rods 37, 38 and 39. The central ring 40 comprises a male connector 41 at the upward facing, abutting end and a female connector 42 at its downward facing abutting end.

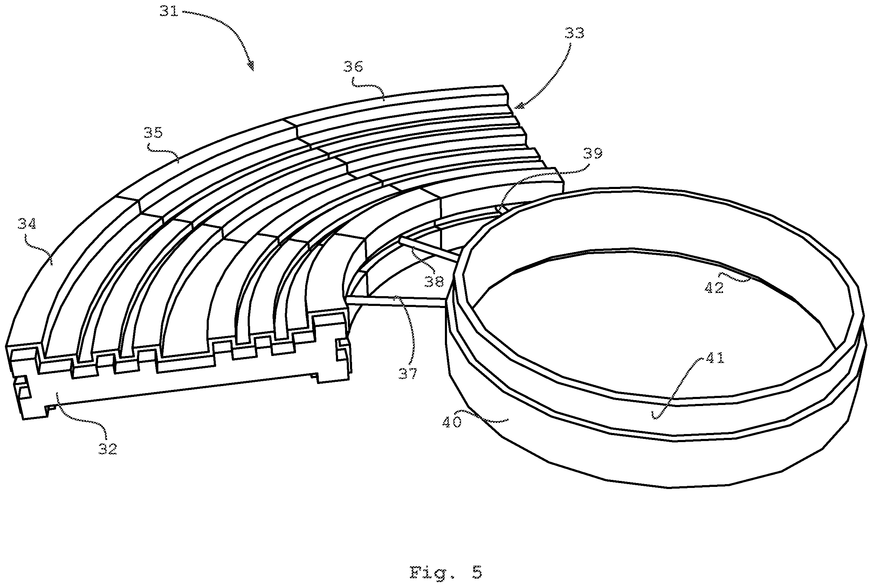

In figure 6 a series of spiral conveyor track portions 43, 44 and 45, similar to the second spiral conveyor track portion 31 are staged on the first spiral conveyor track portion 16 and form a first one and a half flight of a spiral tower. The female connector 33 as shown in figures 5, here invisible, of spiral conveyor track portion 31 engages with the male connector 23, as shown in figure 4 here invisible of the spiral conveyor track portion 16 and at the same time the female connector 42, as shown in figure 5, here invisible of the central ring 40 engages with the male connector 30, as shown in figure 4, here invisible of the foot 17.

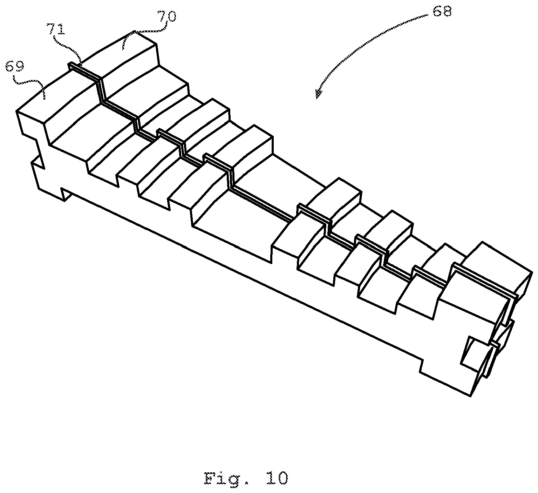

Thus the spiral conveyor track portion 31 can be connected by fitting the ring 40 neatly on top of support ring 29 and then turning the spiral conveyor track portion 31 relative to the spiral conveyor track portion 16 in a clockwise direction until the male and female connectors 33 and 23 are fully engaged. By repeating this action respectively with the spiral conveyor track portions 43, 44 and 45, a spiral tower can modularly be built up. The cut lines in the spiral conveyor track portions 16, 31, 43, 44 and 45 can provide for an on-site modification in the exact angle of the conveyor spiral, by cutting or sawing off any spiral conveyor track sub-portion. Since the spiral conveyor track portions are hollow, at the sawn face, automatically a new female connector is developed. E.g. due to the configuration of the track portions, the spiral conveyor track can be attached to a double male connector, as shown in figure 10. Thus a male connector can be provided at virtually any position of the spiral conveyor track.

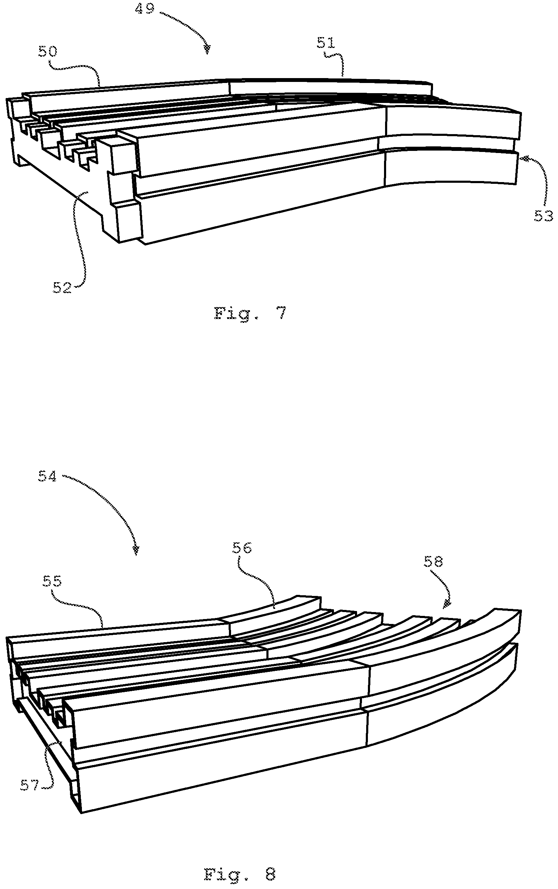

In figure 7 a piece of a spiral conveyor track portion 49 is presented, which can be used to provide a smooth transfer of the conveyor track from a horizontal path to a spiral path. The spiral conveyor track portion 49 is provided with a horizontal piece 50, with a male connector 52 attached thereto and a spiral part 51 with a female connector 53 attached thereto.

Similarly to figure 7, in figure 8 a track portion 54 is shown, having a horizontal part 55 and a spiral part 56. In this case, the spiral conveyor track part 56 spirals upwards, whereas in figure 7, the spiral conveyor track part 51 spirals upwards. In the spiral conveyor track part 54, the horizontal part 55 is provided with a female connector 57 and the spiral part 56 is provided with a male connector 58.

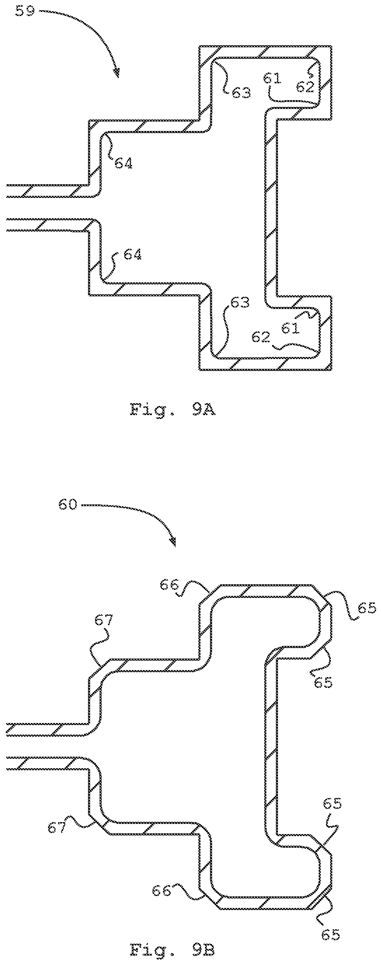

In figure 9A a cross sectional view of a female connector 59 is depicted. The connector 59 is having rounded edges 61, 62, 63 and 64 on the inner side, which is due to the manufacturing technique of rotation moulding. For a proper fit, the connecting male part 60, which is depicted in figure 9B need to have fillets 65, 66, and 67 to make space for these rounded edges 61, 62, 63 and 64 respectively. Thus a tight fit can be provided for, without any after treatment of the product once it has been moulded.

In figure 10 a spiral conveyor track connector piece 68 is depicted. The spiral conveyor connector piece 68 comprises two male type connectors 69 and 70, separated by a seam 71. Both the male connectors 69 and 70 have a curvature that is in correspondence with the curvature of the rest of the spiral conveyor track, such that is fits in tightly. The seam 71 can help in connecting two spiral conveyor track portion together, where the seam 71 can prevent the connector 68 from entering one spiral conveyor track portion only. By the seam, both ends to be connected receive a similar length of the spiral conveyor connector. Thus an optimal connection can be provided for.

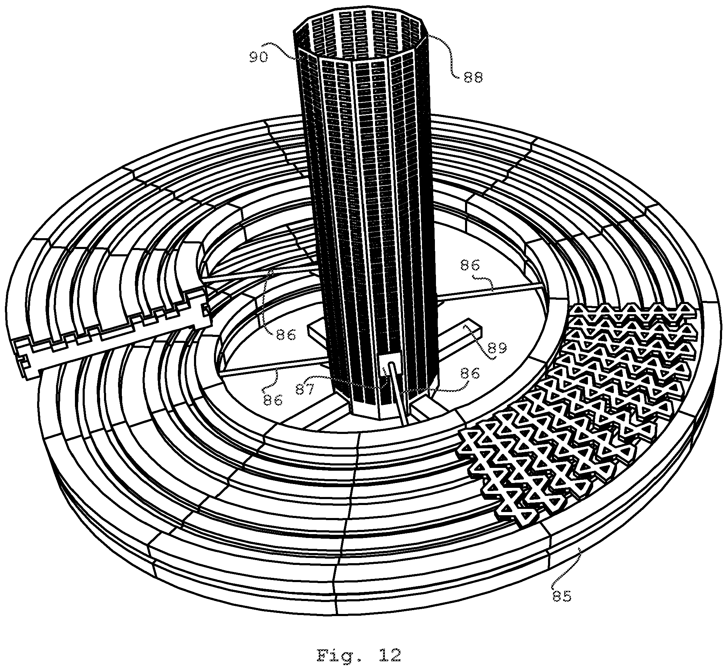

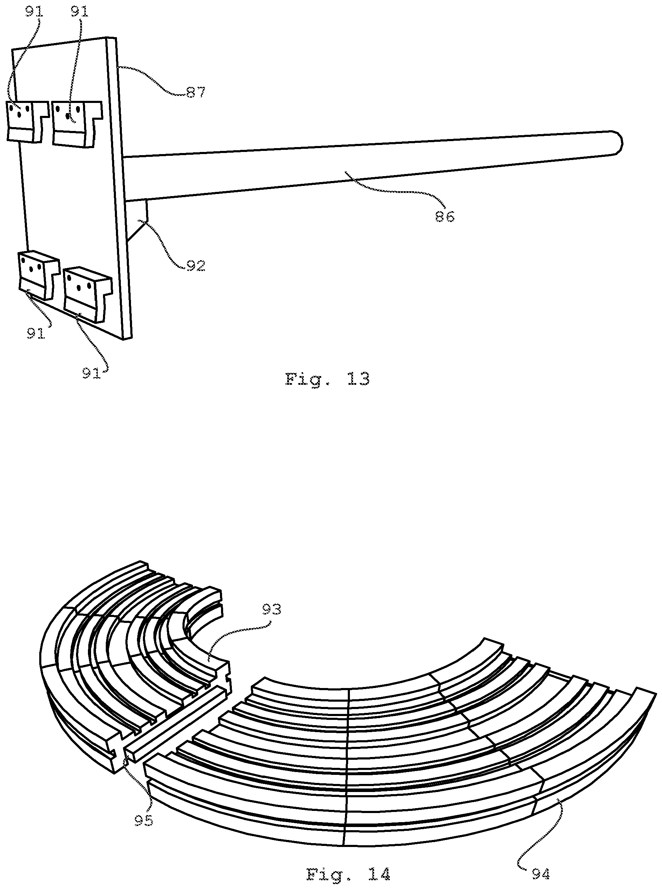

In order to have a smooth guidance of the chain links that move over the spiral conveyor track, strips 72, 73, 74 and 75 are provided for, as is shown in figure 11. These strips 72, 73, 74 and 75 have at their ends skewed little ramps 79, 80, 81 and 82, such that the chain links or the belt moving on top of them do not experience any abutting surface, which can hinder a smooth motion. The strips 72, 73, 74 and 75 can be chosen to have a length longer than a single spiral conveyor track portion 31. Further the strips 72, 73, 74 and 75 can be positioned in the slits 76, 77, 78 and 79 respectively, in a shifted or misaligned manner, to further reduce a bumpy ride of the chain or belt. In figure 12 an alternative central support structure is presented. The support of the spiral conveyor track 85 in this figure is given by an hollow central upright 88. The central upright is based on a foot 89, being formed by four crossed beams. The central upright 88 is provided with a series of connecting openings 90 for engaging with hooks 91 of a support arm 86, as is depicted in detail in figure 13. By the vast number of connecting openings 90, the upright 88 allows for different spiral conveyor track portions with different flights. Thus a very flexible connection of the individual spiral conveyor track portions to the central upright can be provided for.

In figure 13 a detailed perspective view of a support arm 86 is given. The support arm can be connected to a connecting plate 87, on which a number of hooks 91 can be mounted. The hooks 91 fit in the connecting openings 90 of the central upright 88. The connecting plate can be equipped whit a knee 92, in order to provide more bearing strength to the support arm 86. The support arm 86 can be inserted in a spiral conveyor track portion, e.g. 1, 16, 31, 43, 44, 45 49 and/or 54. The arm can be dimensioned thus, that on the outer wall of the spiral conveyor track portions, it can extend beyond. The conveyor track portions must be provided with appropriate bores at the location of the support arms 86, but can also be provide with left to right protruding kissing points at these locations. The outwardly extending pieces of the support arms can be connected to e.g. reinforcement uprights or strips, in order to provide additional strength and stability to the spiral tower in question.

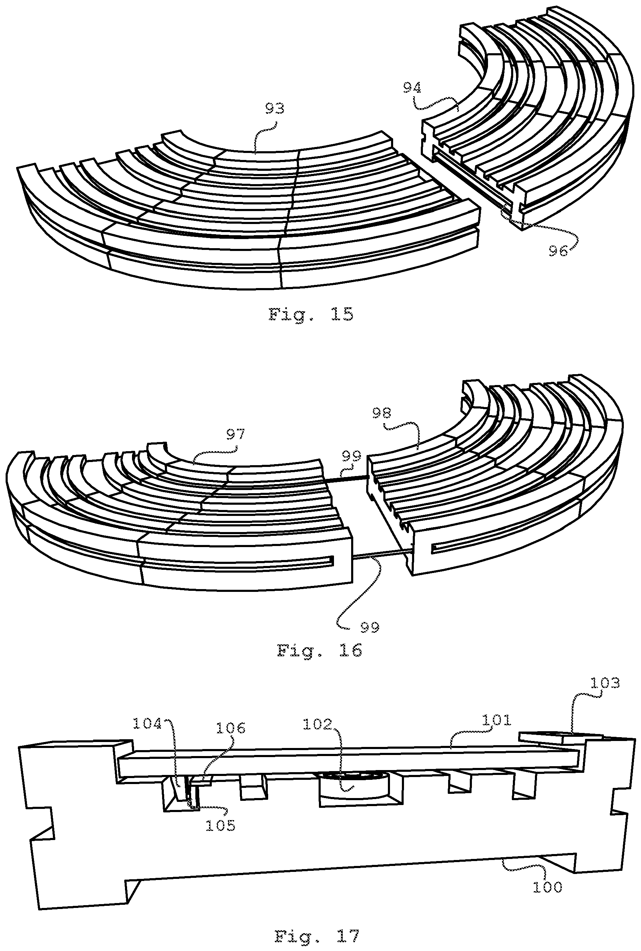

In figure 14 an alternative type of connection is depicted for connecting spiral conveyor track portion 93 to spiral conveyor track portion 94. In figure 15, the same connection is depicted from a different viewpoint. The male connector 95 of the track portion 93 fits in the female connector 96 of the track portion 94.

In figure 16 a further connection is depicted, in which the track portions 97 and 98 are connected with bolts 99. In the option shown in this figure, the abutting ends are flush. A combination with the bolts 99 and the male-female connectors 95 & 96 shown in e.g. figures 2, 14 and 15 can similarly be applied.

In figure 17, two possible options for holding down the conveyor link 101 are shown. In the curves of the spiral, some conveyor links show the tendency to flip, due to the tension forces exerted thereon. This flipping of the links can cause blockage and damage to the chain and possibly to the track portions as well. Thus a strip 103 can be mounted on the track portion 100 for directly holding down the link 101. Alternatively, shown in the same figure, a strip 106 can be mounted on the track portion 100, behind which a roller 105 can engage. Thus, the link 101 is kept in the track 101 with less friction losses. Both strips 103 and 106 can be moulded within the rotation moulding manufacture of the track portion, either by inserting the strips inside the mould before moulding or by adapting the mould.

The invention is to be understood not to be limited to the exemplary embodiments shown in the figures and described in the specification. For instance the spiral parts can have additional interconnections at the outer circumference. The spiral can have more lanes side by side or two or more paths spiralling one around the other.

Instead of a slit in which rollers of the conveyor link or belt are guided, alternatively rollers may be mounted on e.g. de the sides of the tack portions. In this way the track and the belt or links can have a lower height and the spiral may be slimmer. This can save material of construction and provide a even more cost effective spiral.

The spiral conveyor track in the embodiments given in this specification are supported by a central support structure. In alternative solutions support structures that are installed on the circumference of the spiral can be applied as well instead of or additional to a central support structure. These support structures can provide additional stability to the spiralling track, such that its height can be reduced. In general e.g. with heavy loads, these additional outer support structures can prevent the track portions from sagging or twisting.

In the specification and the embodiments, the track portions comprise a counter clockwise rising flight. It is noted that clockwise rising flights can be established in a same fashion as the counter clockwise flights.

These and other modifications are considered to be variations that are part of the scope of the invention outlined in the claims.

### List of reference signs

- 1.: Spiral track portion
- 1A: Spiral track portion
- 1B: Spiral track portion
- 1C: Spiral track portion
- 2.: Surface
- 3.: Slit
- 4.: Slit
- 5.: Slit
- 6.: Slit
- 7.: Slit
- 8.: Wall
- 9.: Wall
- 10.: Surface
- 11.: Surface
- 12.: Surface
- 13.: Surface
- 14.: Male connector
- 15.: Female connector
- 16.: Spiral track portion
- 17.: Foot
- 18.: Track sub portion
- 19.: Track sub portion
- 20.: Track sub portion
- 21.: Cut line
- 22.: Cut line
- 23.: Male connector
- 24.: Female connector
- 25.: Rod
- 26.: Rod
- 27.: Rod
- 28.: Bottom plate
- 29.: Central support ring
- 30.: Male connector
- 31.: Spiral track portion
- 32.: Male connector
- 33.: Female connector
- 34.: Spiral track sub portion
- 35.: Spiral track sub portion
- 36.: Spiral track sub portion
- 37.: Rod
- 38.: Rod
- 39.: Rod
- 40.: Central ring
- 41.: Male connector
- 42.: Female connector
- 43.: Spiral track portion
- 44.: Spiral track portion
- 45.: Spiral track portion
- 46.: Central stem
- 47.: Conveyor chain portion
- 48.: Carrier element
- 49.: Top track portion
- 50.: Horizontal part
- 51.: Spiral part
- 52.: Male connector
- 53.: Female connector
- 54.: Bottom track portion
- 55.: Horizontal part
- 56.: Spiral part
- 57.: Female connector
- 58.: Male connector
- 59.: Female connector
- 60.: Male connector
- 61.: Inner corner
- 62.: Inner corner
- 63.: Inner corner
- 64.: Inner corner
- 65.: Fillet
- 66.: Fillet
- 67.: Fillet
- 68.: Connector piece
- 69.: Male connector
- 70.: Male connector
- 71.: Edge
- 72.: Strip
- 73.: Strip
- 74.: Strip
- 75.: Strip
- 76.: Slit
- 77.: Slit
- 78.: Slit
- 79.: Slit
- 80.: Ramp
- 81.: Ramp
- 82.: Ramp
- 83.: Ramp
- 84.: Spiral
- 85.: Spiral
- 86.: Arm
- 87.: Connecting plate
- 88.: Central upright
- 89.: Foot
- 90.: Connecting opening
- 91.: Hook
- 92.: Knee
- 93.: Track portion
- 94.: Track portion
- 95.: Male connector
- 96.: Female connector
- 97.: Track portion
- 98.: Track portion
- 99.: Bolt
- 100.: Track portion
- 101.: Conveyor link
- 102.: Roller
- 103.: Strip
- 104.: Roller tab
- 105.: Roller
- 106.: Strip
- H.: Height
- S.: Pitch

## Claims

1. A spiral conveyor part, suitable for a belt or chain conveyor, having a spiral conveyor track portion (1, 1a-C, 18-20, 34-36, 43-45, 49, 54), **characterised in that** the spiral conveyor track portion comprises at least one rotary moulded spiral conveyor track structure;
wherein the inner space of the rotary moulded spiral conveyor track structure is hollow and/or partially or completely filled with a second component;
wherein the spiral conveyor track portion comprises slide bar connectors (4-7, 76-79) comprising longitudinal slits (4-7, 76-79); and
wherein at least one, first abutting end is provided with a first connector (14, 15, 23, 24, 30, 32, 33, 41, 42, 52, 53, 58, 59, 60, 69, 70, 95, 96) and a second abutting is provided with a second connector (14, 15, 23, 24, 30, 32, 33, 41, 42, 52, 53, 58, 59, 60, 69, 70, 95, 96).

2. A spiral conveyor part according to claim 1, wherein the spiral conveyor track portion comprises a slit (3).

3. A spiral conveyor part according to claim 1 or 2, wherein the first and/or the second connector (14, 15, 23, 24, 30, 32, 33, 41, 42, 52, 53, 58, 59, 60, 69, 70, 95, 96) are of the male (23, 30, 32, 41, 52, 58, 60, 69, 70, 95) or of the female type (15, 24, 33, 42, 53, 57, 59, 96).

4. A spiral conveyor part according to claim 3, wherein a female type connector comprises a male connector receiving space.

5. A spiral conveyor part according to any of the preceding claims, wherein the abutting first end opposing second end comprises a shaft or axle, configured to guide a belt or a chain return.

6. A spiral conveyor part according to claim 5, wherein the shaft is connected to a drive, e.g. an electric motor, eventually provided with a gear.

7. A spiral conveyor part according to claim 5, wherein the axle is configured to run idle.

8. A belt or a chain conveyor comprising at least a spiral conveyor part according to claim 6 and a spiral conveyor part according to claim 7 and eventually a spiral conveyor part according to any of the preceding claims.

9. A spiral conveyor part according to any of the claims 1-4, wherein the spiral conveyor part is along its track contour provided with indicators, lines or marks, to indicate a certain length or angle of track, such that it can be sawn or cut at these marks in order to obtain a sub conveyor part of a predetermined angle and/or length.

10. A spiral conveyor part according to any of the claims 1-5, having a central ring (40), a part of an upright or a stem like structure (46) attached thereto, which can support the spiral conveyor part and additional rings (40) of other spiral conveyor parts being assembled or mounted thereon.

11. A spiral conveyor part according to claim 10, wherein the height of the central ring (40), the upright, or the stem like structure (46) corresponds to the flight height (H) of the spiral conveyor part (1), such that when several spiral conveyor parts (16, 31, 43, 44, 45) are mounted on top of each other, the central rings (40), uprights or stem like structures (46) of each of the individual spiral conveyor part (16, 31, 43, 44, 45) forms a combined central stem (46), upright or stacked ring structure.

12. A method of manufacturing a spiral conveyor part (1, 1a-C, 18-20, 34-36, 43-45, 49, 54), comprising the following steps, to be performed in any suitable order:
a) providing a rotary mould having a cavity shaped as the outside of any of the spiral conveyor track portions of the spiral conveyor parts according to claims 1-7;
b) adding a thermoplastic or resinous material inside the mould;
c) rotating the mould under gradually heating the mould;
d) allowing the thermoplastic material to melt and to cover the inner walls of the mould or allowing the resinous material to cure on the inner walls of the mould;
e) allowing the mould to cool;
f) opening the mould to remove the spiral conveyor part (1, 1a-C, 18-20, 34-36, 43-45, 49, 54).

## Patentansprüche

1. Spiralfördererteil, das für einen Band- oder Kettenförderer geeignet ist, das einen Spiralfördererschienenabschnitt (1, 1a-C, 18-20, 34-36, 43-45, 49, 54) aufweist, **dadurch gekennzeichnet, dass** der Spiralfördererschienenabschnitt mindestens eine schleudergegossene Spiralfördererschienenstruktur umfasst; wobei der Innenraum der schleudergegossenen Spiralfördererschienenstruktur hohl und/oder teilweise oder komplett mit einer zweiten Komponente gefüllt ist; wobei der Spiralfördererschienenabschnitt Gleitstangenverbinder (4-7, 76-79) umfasst, die Längsschlitze (4-7, 76-79) umfassen; und
wobei mindestens ein erstes Anschlagende mit einem ersten Verbinder (14, 15, 23, 24, 30, 32, 33, 41, 42, 52, 53, 58, 59, 60, 69, 70, 95, 96) versehen ist und ein zweiter Anschlag mit einem zweiten Verbinder (14, 15, 23, 24, 30, 32, 33, 41, 42, 52, 53, 58, 59, 60, 69, 70, 95, 96) versehen ist.

2. Spiralfördererteil nach Anspruch 1, wobei der Spiralfördererschienenabschnitt einen Schlitz (3) umfasst.

3. Spiralfördererteil nach Anspruch 1 oder 2, wobei der erste und/oder zweite Verbinder (14, 15, 23, 24, 30, 32, 33, 41, 42, 52, 53, 58, 59, 60, 69, 70, 95, 96) Steckverbinder (23, 30, 32, 41, 52, 58, 60, 69, 70, 95) oder Buchsenverbinder (15, 24, 33, 42, 53, 57, 59, 96) sind.

4. Spiralfördererteil nach Anspruch 3, wobei ein Buchsenverbinder einen Aufnahmeraum für einen Steckverbinder umfasst.

5. Spiralfördererteil nach einem der vorstehenden Ansprüche, wobei das anschlagende erste Ende, das dem zweiten Ende gegenüberliegt, eine Welle oder Achse umfasst, die dazu ausgelegt ist, eine Band- oder Kettenrückführung zu leiten.

6. Spiralfördererteil nach Anspruch 5, wobei die Welle mit einem Antrieb verbunden ist, z. B. einem Elektromotor, der schließlich mit einem Getriebe versehen ist.

7. Spiralfördererteil nach Anspruch 5, wobei die Achse dazu ausgelegt ist, leerzulaufen.

8. Band- oder Kettenförderer, der mindestens ein Spiralfördererteil nach Anspruch 6 und ein Spiralfördererteil nach Anspruch 7 und schließlich ein Spiralfördererteil nach einem der vorstehenden Ansprüche umfasst.

9. Spiralfördererteil nach einem der Ansprüche 1-4, wobei das Spiralfördererteil entlang seiner Schienenkontur mit Kennzeichnungen, Linien oder Markierungen versehen ist, um eine bestimmte Länge oder einen Winkel der Schiene anzuzeigen, sodass die Schiene an diesen Markierungen gesägt oder geschnitten werden kann, um ein Unterfördererteil mit einem vorgegebenen Winkel bzw. einer vorgegebenen Länge zu erhalten.

10. Spiralfördererteil nach einem der Ansprüche 1-5, das einen Mittelring (40) aufweist, an dem ein Teil eines Pfostens oder einer stammartigen Struktur (46) befestigt ist, die das Spiralfördererteil tragen kann, und wobei zusätzliche Ringe (40) anderer Spiralfördererteile darauf installiert oder angebracht werden.

11. Spiralfördererteil nach Anspruch 10, wobei die Höhe des Mittelrings (40), des Pfostens oder der stammartigen Struktur (46) der Laufhöhe (H) des Spiralfördererteils (1) entspricht, sodass, wenn mehrere Spiralfördererteile (16, 31, 43, 44, 45) aufeinander angebracht werden, die Mittelringe (40), Pfosten oder stammartigen Strukturen (46) jedes einzelnen Spiralfördererteils (16, 31, 43, 44, 45) einen gemeinsamen Stamm (46), Pfosten oder eine gestapelte Ringstruktur ausbilden.

12. Verfahren zur Herstellung eines Spiralfördererteils (1, 1a-C, 18-20, 34-36, 43-45, 49, 54), die folgenden Schritte umfassend, die in einer beliebigen, geeigneten Reihenfolge durchgeführt werden können:
a) Bereitstellen einer Schleudergussform, die einen Hohlraum aufweist, der so geformt ist wie die Außenseite eines der Spiralfördererschienenabschnitte der Spiralfördererteile nach einem der Ansprüche 1-7;
b) Hinzugeben eines thermoplastischen oder Harzmaterials in die Form;
c) Drehen der Form unter allmählichem Erwärmen der Form;
d) dem thermoplastischen Material erlauben, zu schmelzen und die Innenwände der Form zu bedecken oder dem Harzmaterial erlauben, auf den Innenwänden der Form auszuhärten;
e) der Form erlauben, sich abzukühlen;
f) Öffnen der Form, um das Spiralfördererteil (1, 1a-C, 18-20, 34-36, 43-45, 49, 54) zu entnehmen.

## Revendications

1. Partie de transporteur hélicoïdal, destinée à un transporteur à bande ou à chaîne, ayant une partie de piste de transporteur en spirale (1, la-C, 18-20, 34-36, 43-45, 49, 54), **caractérisée en ce que** la partie de piste de transporteur en spirale comprend au moins une structure de piste de transporteur en spirale moulée rotative;
l'espace intérieur de la structure de piste de transporteur en spirale moulée rotative étant creux et/ou partiellement ou complètement rempli d'un second composant; la partie de piste de transporteur en spirale comprenant des connecteurs de barre coulissante (4-7, 76-79) comprenant des fentes longitudinales (4-7, 76-79); et
au moins une première extrémité en butée étant munie d'un premier connecteur (14, 15, 23, 24, 30, 32, 33, 41, 42, 52, 53, 58, 59, 60, 69, 70, 95, 96) et une seconde extrémité en butée étant munie d'un second connecteur (14, 15, 23, 24, 30, 32, 33, 41, 42, 52, 53, 58, 59, 60, 69, 70, 95, 96).

2. Partie de transporteur hélicoïdal selon la revendication 1, dans laquelle la partie de piste de transporteur en spirale comprend une fente (3).

3. Partie de transporteur hélicoïdal selon la revendication 1 ou 2, dans laquelle le premier et/ou le second connecteur (14, 15, 23, 24, 30, 32, 33, 41, 42, 52, 53, 58, 59, 60, 69, 70, 95, 96) sont de type mâle (23, 30, 32, 41, 52, 58, 60, 69, 70, 95) ou femelle (15, 24, 33, 42, 53, 57, 59, 96).

4. Partie de transporteur hélicoïdal selon la revendication 3, dans laquelle un connecteur de type femelle comprend un espace de réception de connecteur mâle.

5. Partie de transporteur hélicoïdal selon l'une quelconque des revendications précédentes, dans laquelle la première extrémité en butée opposée à la seconde extrémité en butée comprend un arbre ou un axe, configuré pour guider un retour de courroie ou un retour de chaîne.

6. Partie de transporteur hélicoïdal selon la revendication 5, dans laquelle l'arbre est relié à un entraînement, par exemple un moteur électrique, éventuellement équipé d'un engrenage.

7. Partie de transporteur hélicoïdal selon la revendication 5, dans laquelle l'axe est configuré pour tourner à vide.

8. Transporteur à bande ou à chaîne comprenant au moins une partie de transporteur hélicoïdal selon la revendication 6 et une partie de transporteur hélicoïdal selon la revendication 7 et éventuellement une partie de transporteur hélicoïdal selon l'une des revendications précédentes.

9. Partie de transporteur hélicoïdal selon l'une quelconque des revendications 1 à 4, dans laquelle la partie de transporteur hélicoïdal est, le long de son contour de piste, munie d'indicateurs, de lignes ou de marques, pour indiquer une certaine longueur ou un certain angle de piste, de sorte qu'elle peut être sciée ou coupée à ces marques afin d'obtenir une partie de transporteur auxiliaire d'un angle et/ou d'une longueur prédéterminé(e).

10. Partie de transporteur hélicoïdal selon l'une quelconque des revendications 1 à 5, comportant un anneau central (40), une partie d'un montant ou une structure en forme de tige (46) fixé(e) à celle-ci, qui peut supporter la pièce de transporteur hélicoïdal et des anneaux supplémentaires (40) d'autres parties de transporteur hélicoïdal assemblées ou montées sur celle-ci.

11. Partie de transporteur hélicoïdal selon la revendication 10, dans laquelle la hauteur de l'anneau central (40), du montant ou de la structure en forme de tige (46) correspond à la hauteur de pas (H) de la partie de transporteur hélicoïdal (1), de sorte que lorsque plusieurs parties de transporteur hélicoïdal (16, 31, 43, 44, 45) sont montées les unes sur les autres, les anneaux centraux (40), les montants ou les structures en forme de tige (46) de chaque élément individuel (16, 31, 43, 44, 45) forment une combinaison de tige centrale (46), de montant ou de structure d'anneaux superposés.

12. Procédé de fabrication d'une partie de transporteur hélicoïdal (1, la-C, 18-20, 34-36, 43-45, 49, 54), comprenant les étapes, à exécuter dans tout ordre approprié, consistant à:
a) fournir un moule rotatif ayant une cavité ayant la forme de l'extérieur de l'une quelconque des parties de piste de transporteur en spirale des parties de transporteur en spirale selon les revendications 1 à 7;
b) ajouter un matériau thermoplastique ou résineux à l'intérieur du moule;
c) faire tourner le moule en chauffant progressivement le moule;
d) laisser fondre le matériau thermoplastique et recouvrir les parois internes du moule ou laisser durcir le matériau résineux sur les parois internes du moule;
e) laisser refroidir le moule;
f) ouvrir le moule pour enlever la partie de transporteur hélicoïdal (1, la-C, 18-20, 34-36, 43-45, 49, 54).
